**Europäisches Patentamt**

**European Patent Office**

**Office européen des brevets**

(19)

(11) Veröffentlichungsnummer: **0 119 322**
A1

# (12) EUROPÄISCHE PATENTANMELDUNG

(21) Anmeldenummer: **83113061.2**

(22) Anmeldetag: **23.12.83**

(51) Int. Cl.³: **B 64 D 1/14**

---

(30) Priorität: **18.03.83 DE 3309698**

(43) Veröffentlichungstag der Anmeldung: **26.09.84**
**Patentblatt 84/39**

(84) Benannte Vertragsstaaten: **FR GB IT NL**

(71) Anmelder: **ERNO Raumfahrttechnik Gesellschaft mit beschränkter Haftung, Hünefeldstrasse 1-5, D-2800 Bremen (DE)**

(72) Erfinder: **Spies, Johann, Dipl.-Ing., Joh.-Eilersweg 2, D-2805 Stuhr 4 (DE)**

---

(54) **Vorrichtung zum weichen Absetzen von Lasten aus der Luft.**

(57) Zum weichen Absetzen von Lasten (3) mittels Bremshilfen (1) ist vorgesehen, die zwischen Last und Bremshilfe angeordnete Leine (2) vor dem Aufsetzen auf den Untergrund über eine zugeordnete Winde (4) aufzuspulen. Dieses geschieht dadurch, daß ein Annäherungssensor (5) die Winde kurz vor dem Aufsetzen in Betrieb setzt.

8225E60                                    15. März 1983/B/Bt

ERNO Raumfahrtechnik GmbH

---------------------------------------------------------------

Vorrichtung zum weichen Absetzen
von Lasten aus der Luft

---------------------------------------------------------------

Die Erfindung bezieht sich auf eine Vorrichtung zum
weichen Absetzen von Lasten aus der Luft mittels Bremshilfen, wie Fallschirme, Autogiros, aus größeren Höhen,
wobei die Last über Leinen mit der Bremshilfe verbunden ist.

Anordnungen dieser Art zum Absetzen von Lasten sind
bekannt. Hierbei werden zum Absetzen von Personen und
Gerät aus Flugzeugen sowie zur Bergung von Raketenstufen und Instrumentenkapseln üblicherweise Fallschirme eingesetzt. Nachteilig sind dabei die zum Teil
beträchtlichen Sinkgeschwindigkeiten, deren Verringerung zur Vermeidung eines unzulässig harten Aufschlags
zwar erwünscht und möglich, aber mit Rücksicht auf die Größe des Fallschirms, Masse des Bergungssystems, Größe des Öffnungsstoßes und Windempfindlichkeit (Abdrift) jedoch unpraktikabel ist. Beim Auftreffen auf dem Boden treten harte Landestöße auf, die zur Beschädigung oder Zerstörung der zu bergenden Last führen können. Es ist deshalb bekannt zusätzliche schockabsorbierende Systeme, wie Dämpfungssäcke und/oder Bremsraketen zu verwenden. Diese Maßnahmen erhöhen aber Komplexität, Einbauvolumen, Masse und Kosten des Bergungssystems und vermindern seine Zuverlässigkeit.

Aufgabe der Erfindung ist es, eine einfache Anordnung für das weiche Absetzen von Lasten aus der Luft zu schaffen und ohne eine wesentliche Vergrößerung von Bremshilfe und Masse des Bergungssystems die Durchführung zu gewährleisten.

Die Lösung der Aufgabe erfolgt erfindungsgemäß dadurch, daß die **Last** mit der Leine unter Zwischenschaltung einer Aufspulvorrichtung in der Art einer Winde verbunden ist, die einen Antrieb aufweist und über einen Annäherungssensor zum Untergrund derart steuerbar ist, daß vor dem Aufsetzen der Last ein Abstand zwischen der Bremshilfe und der Last durch Einholen der Leine verkürzbar ist.

Hierdurch wird auf einfache Weise die Sinkgeschwindigkeit beim Absetzvorgang praktisch aufgehoben und ein weiches Absetzen erzielt. Selbstverständlich muß hierzu die Leine zwischen Bremshilfe und Last eine entsprechende Länge aufweisen und die Steuerung des Einholvorganges abgestimmt sein.

Eine einfache Ausbildung wird erfindungsgemäß dadurch geschaffen, daß der Annäherungssensor als voreilender Aufschlagssensor ausgebildet ist.

Alternativ wird vorgeschlagen, daß der Annäherungssensor als Entfernungsmesser zum Untergrund ausgebildet ist.

Ferner wird vorgeschlagen, daß der Antrieb der Aufspulvorrichtung als Kleingasturbine mit Heiß- oder
Kaltgasantrieb ausgebildet ist.

Als vorteilhafte Ausgestaltung ist vorgesehen, daß
die Aufspulvorrichtung ein lastabhängiges Bremssystem zur Freigabe der Leine beim Öffnen
der Bremshilfe während des Absetzvorganges aufweist.
Hierbei ist es möglich, die Aufspulvorrichtung zusätzlich für die Dämpfung des Öffnungsstoßes auszunutzen.

In der Zeichnung ist ein Ausführungsbeispiel der
Erfindung schematisch dargestellt. Es zeigen:

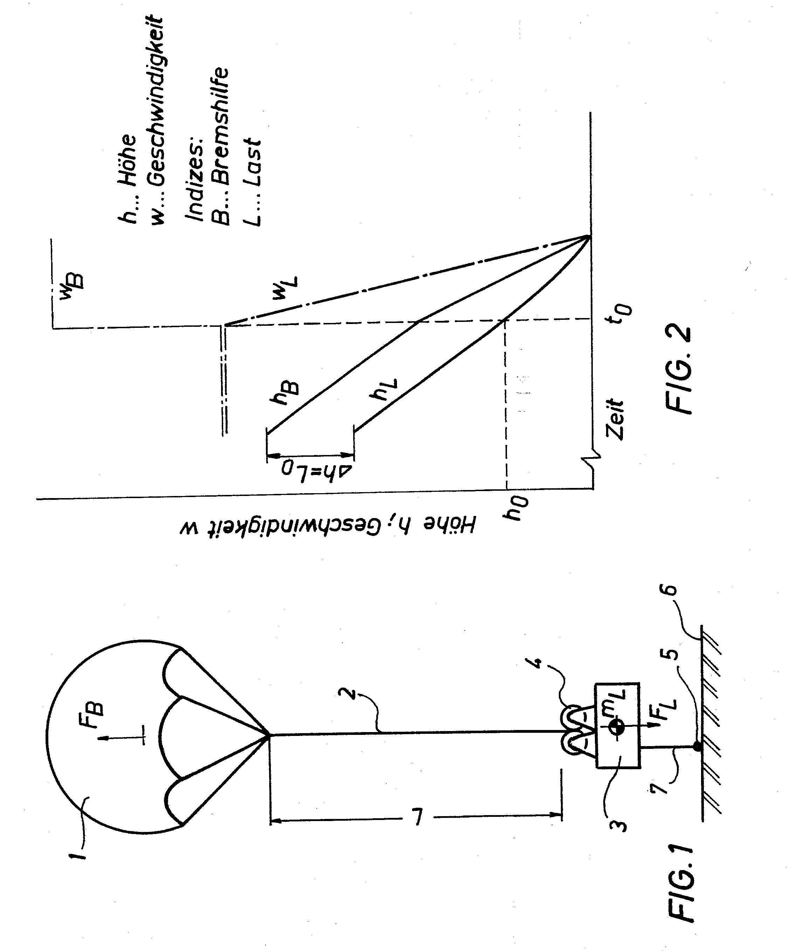

Fig. 1   eine Prinzipdarstellung einer
         Vorrichtung mit einem voreilenden
         Aufschlagssensor,

Fig. 2   ein Zeit-Weg- und Zeit-Geschwindigkeits-Diagramm.

Bei der dargestellten Anordnung ist ein Fallschirm
1 als Bremshilfe über eine oder mehrere Leinen 2
mit einer     Last 3 verbunden. Hierbei ist eine
Aufspuleinrichtung in Form einer Winde 4 zur Aufnahme der Leine 2 zwischengeschaltet. Diese Winde
4 wird über einen nicht näher dargestellten Antrieb betrieben. Zusätzlich ist in diesem Fall ein
Annäherungssensor 5 als voreilender Aufschlagssensor über eine Verbindung 7 angeordnet.

Beim Landeverfahren wird von einem stationären Sinkvorgang mit einer voll ausgefahrenen Leine 2 und von einer Gleichgeschwindigkeit ausgegangen. Bei Annäherung an den Untergrund startet der Annäherungssensor 5 die Winde 4 in der Höhe $h_o$ zum Zeitpunkt $t_o$. Die Winde 4 holt dann die Leine 2 ein und übt dabei Zugkräfte ($F_{L,B} = m (g - \frac{dw}{dt})$) auf den Fallschirm 1 sowie die Last 3 aus. Hierbei wird die Sinkgeschwindigkeit $w_B$ des Fallschirmes 1 sowie der Widerstand der Last 3 ansteigen und die Sinkgeschwindigkeit $w_L$ der Last 3 verzögert. Im Idealfall und bei entsprechender Abstimmung des Systems (Leinenlänge, Einholgeschwindigkeit, Anfangsgeschwindigkeit) wird bis zum Aufsetzen auf dem Untergrund 6 die Geschwindigkeit gerade vollständig abgebaut.

Zum Antrieb der Winde 4 können Elektromotore, Hydraulikmotore, Kalt- oder Heißgasmotore bzw. Kalt- und Heißgasturbinen zur Anwendung kommen.

Zur Vermeidung starker Öffnungsstöße beim Absetzvorgang und Entfalten des Fallschirmes 1 ist es möglich, durch eine nicht näher dargestellte Bremseinrichtung an der Winde 4 das Abspulen der Leine 2 vorzusehen und somit eine umgekehrte Arbeitsweise als beim Aufsetzen der Last 3 auf den Untergrund 6 zu erzielen. Es wird damit ermöglicht leichtere Aufhängungen und Befestigungsstrukturen anzuordnen.

/

8225E60                    15. März 1983/B/Bt


ERNO Raumfahrtechnik GmbH

-------------------------------------------------------------------

P a t e n t a n s p r ü c h e


1. Vorrichtung zum weichen Absetzen von Lasten aus der Luft mittels Bremshilfen, wie Fallschirme, Autogiros, aus größeren Höhen, wobei die Last über Leinen mit der Bremshilfe verbunden ist, dadurch gekennzeichnet, daß die Last (3) mit der Leine (2) unter Zwischenschaltung einer Aufspulvorrichtung (4) in der Art einer Winde verbunden ist, die einen Antrieb aufweist und über einen Annäherungssensor (5) zum Untergrund (6) derart steuerbar ist, daß vor dem Aufsetzen der Last (3) ein Abstand zwischen der Bremshilfe (1) und der Last (3) durch Einholen der Leine (2) verkürzbar ist.

2. Vorrichtung nach Anspruch 1, dadurch gekennzeichnet, daß der Annäherungssensor (5) als voreilender Aufschlagssensor ausgebildet ist.

3. Vorrichtung nach Anspruch 1, dadurch gekennzeichnet, daß der Annäherungssensor (5) als Entfernungsmesser zum Untergrund ausgebildet ist.

4. Vorrichtung nach einem der Ansprüche 1 bis 3, dadurch gekennzeichnet, daß der Antrieb der Aufspulvorrichtung (4) als Kleingasturbine mit Heißoder Kaltgasgetriebe ausgebildet ist.

5. Vorrichtung nach einem der Ansprüche 1 bis 4, dadurch gekennzeichnet, daß die Aufspulvorrichtung (4) ein lastabhängiges Bremssystem zur Freigabe der Leine (2) beim Öffnungsstoß der Bremshilfe (1) während des Absetzvorganges aufweist.

FIG. 1

$F_B$

1

2

7

4

3  $m_L$

7  $F_L$

5  6

FIG. 2

Höhe $h$; Geschwindigkeit $w$

$w_B$

$h$... Höhe
$w$... Geschwindigkeit

Indizes:
B... Bremshilfe
L... Last

$h_B$

$w_L$

$\Delta h = L_0$

$h_L$

$h_0$

Zeit  $t_0$

0119322

Europäisches
Patentamt

EUROPÄISCHER RECHERCHENBERICHT

0 119 322

Nummer der Anmeldung

EP 83 11 3061

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | CH-A- 401 410 (DELAMAIRE)<br>* Seite 1, Zeilen 1-11; Seite 2, Zeilen 16-23 * | 1,2,4 | B 64 D 1/14 |
| X | GB-A- 969 716 (ROCKET POWER)<br>* Seite 1, Zeilen 27-41; Seite 2, Zeilen 48-56 * | 1,2,4 | |
| X | FR-A-1 372 484 (ETAT FRANCAIS)<br>* Résumé * | 1,2,4 | |
| X | US-A-3 387 805 (BARNETT)<br>* Spalte 5, Zeilen 12-24 * | 1,2,4 | |
| A | FR-A-1 431 740 (LATECOERE)<br>* Insgesamt * | 1 | RECHERCHIERTE SACHGEBIETE (Int. Cl. ³)<br><br>B 64 D |

Der vorliegende Recherchenbericht wurde für alle Patentansprüche erstellt.

| Recherchenort | Abschlußdatum der Recherche | Prüfer |
|---|---|---|
| DEN HAAG | 15-06-1984 | HAUGLUSTAINE H.P.M. |